# EUROPEAN PATENT APPLICATION

(11) **EP 2 388 535 A1**
(43) Date of publication of application: **23.11.2011**
(21) Application number: 10163096.0
(22) Date of filing: 18.05.2010
(51) Int. Cl.: F24J 2/52

(54) **Solar panel support structure**

(71) Applicant: Van Der Valk Systemen B.V., 2681 LP Monster (NL)
(72) Inventor: Van Deursen, Adrianus Gerardus, 2253 HA, Voorschoten (NL); Prins, Vincent, 2681 LP, Monster (NL); Broos, Johan Martien, 2673 BC, Naaldwijk (NL)
(74) Representative: Ketelaars, Maarten F.J.M.

(57) **Abstract**

A support structure (1) for solar panels (2), comprises a series of frames (3) which are arranged next to each other and which each comprise a solar panel support bar (4). The frames each comprise mutually spaced legs (5, 6) which each comprise a pair of spaced apart, generally parallel and rectilinear tubes (12, 13) having a hollow, preferably cylindrical cross section and which are connected to opposite sides of the solar panel support bar (4) as well as to a respective foundation element (7). Preferably, the tubes of each pair extend free of interconnection between said tubes over at least a major part thereof which is equal to at least half of the length of said tubes, preferably over the full part thereof between the solar panel support bar (4) and the foundation element (7).

## Description

The invention is related a support structure for solar panels, comprising a series of frames which are arranged next to each other and which each comprise a solar panel support bar. Such a support structure is disclosed in DE-B3-102005007184. Said prior art support structure comprises generally triangular frames having a horizontally extending profile, a vertically extending profile and a solar panel support bar extending in a slanting fashion between these profiles. The support structure is fit for installation on a roof or a flat bottom, over which the horizontally extending profile is arranged.

Such a support structure has several disadvantages. Due to the presence of the horizontally extending profile, the support structure is less fit for installation on an uneven terrain. Moreover, the process of assembling the support structure is rather cumbersome as the several parts thereof must be connected to each other in a specific way, which is time consuming. As the support structure is mounted directly above a roof etc, it is vulnerable with respect to wind loading. This is caused by the fact that the air flow caused by winds can be trapped between the roof and the slantingly oriented panels.

The object of the invention is therefore to provide as support structure for solar panels which is more versatile and less vulnerable, which can be installed on different types of terrain and which is cost effective. Said object is achieved in that the frames each comprise mutually spaced legs which each comprise a pair of paced apart, generally parallel and rectilinear tubes having a hollow, preferably cylindrical cross section and which are connected to opposite sides of the solar panel support bar as well as to a respective foundation element. Preferably, the tubes of each pair extend free of interconnection between said tubes over at least a major part thereof which is equal to at least a quarter, preferably a third, more preferably half of the length of said tubes. The tubes of a pair may be of equal length, although it is not necessary.

The support structure according to the invention has multiple features by means of which the abovementioned objects are obtained. First of all, the presence of downwardly extending legs provide the opportunity to bridge unevenness aspects of the terrain, whereby the support structure can be applied in a versatile way. Additionally, the support structure is cost-effective, as the legs are of a simple construction with hollow tubes. The tubes of each pairs of tubes are generally not interconnected, which leads to low costs. Yet as a result of the stable behavior of the circular cross section of such tubes, the bearing capacity thereof is quite acceptable. The legs provide an open character to the support structure, in such a way that the wind loading can remain limited.

The stability of the solar panel support bars is furthermore promoted by the generally symmetrical position of the tubes on both sides of said bar, whereby the proper orientation of the solar panels can be maintained in a reliable way. Also the circumstance that the legs of a pair may have equal lengths, contributes to the stable support of the solar panels. The tubes in question can be mass produced in an efficient, economic way, also in case lips are formed at the opposite ends of the tubes for mounting these onto the other components of the support structure. By means of such lips, the tubes can be connected to opposite sides of a solar panel support bar and to a foundation element. In particular, the lips of a pair of tubes may be connected to opposite sides of a respective support bar by means of a bolt which extends through the support bar and the lips.

According to a particular embodiment, a pair of tubes may extend free of interconnection over the full part thereof between the solar panel support bar and the foundation element. Dependent on the required angular position of the solar panels and the terrain conditions, each frame may comprise a relatively long leg and a relatively short leg providing a slanting orientation of the solar panel support bar.

The stability of the support structure can be further increased in case a frame comprises a stabilizing strut which extends obliquely between the support bar and at least one leg and/or between both legs, said strut comprising a pair of generally spaced apart parallel and rectilinear tubes of equal length having a hollow, preferably circular cross section, the tubes of each pair extending free of interconnection between said tubes over at least a major part thereof which is equal to at least half of the length of said tubes. Similarly, the stabilizing strut tubes of each pair can be connected to opposite sides of the solar panel support bar. Also, the stabilizing strut tubes of each pair can be connected to opposite sides of a foundation element. The lips of these stabilizing strut tubes may be oriented according to, and/or coincide with, the longitudinal direction of said tubes. In case the tubes are not fully parallel, the lips will exhibit a small angle with respect to the longitudinal direction of the tubes as well.

For the purpose of improving stability in lateral direction of the frames, neighboring frames may be interconnected through hollow rectilinear tubes, possibly of circular cross section and/or possibly of equal length, which are preferably positioned at opposite ends of the support bars. The mutual distance of two neighboring solar panel support tubes may thus be held at a required spacing, depending on the width of the solar panels.

Furthermore, neighboring frames can be interconnected through obliquely oriented stabilizing tubes, possibly of circular cross section. It is also possible to apply pairs of tubes for this interconnection of neighboring frames. It is not necessary to apply such stabilizing tubes between all frames. These stabilizing tubes can be connected, possibly by means of lips, to a leg, for instance to a clamp which engages both tubes of said leg, said clamp being positioned outside the major part of said tubes which extends in an uninterrupted fashion free of interconnection. Despite the presence of one or two of such clamps, the tubes are generally free from interconnections in the major part thereof Thus, the stability of these tubes mainly depends on the properties of the cross section thereof, such as wall thickness, circular shape of the cross section, as well as on the length and the end supports thereof, such as clamped, rotatable etc. The neighboring tube of a pair therefore does not contribute to the stability of the other tube of the pair.

The invention is furthermore related to a solar panel installation, comprising a support structure as described before, as well as solar panels which are each arranged on respectively two neighboring solar panel support bars of said support structure.

The invention will now be described further with reference to an embodiment shown in the drawings.
Figure 1 shows the view in perspective of the solar panel installation with support structure.
Figure 2 shows a side view of the solar panel installation.
Figure 3 shows detail III of figure 1.
Figure 4 shows a detail IV of figure 1.
Figure 5 shows a detail of a clamp.
Figure 6 shows a solar panel connection.
Figure 7 shows a solar panel hook.

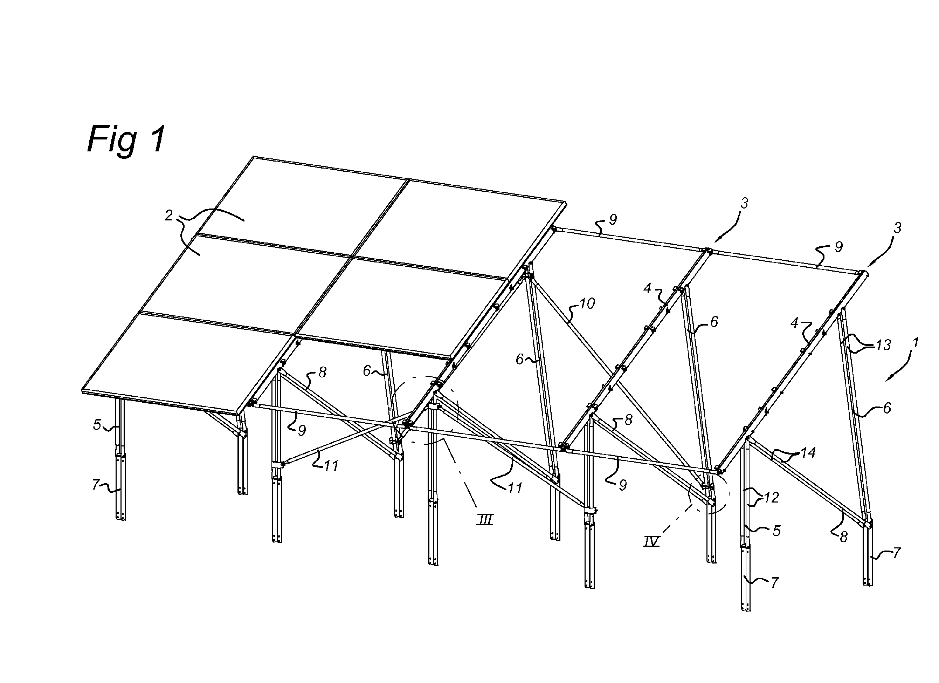

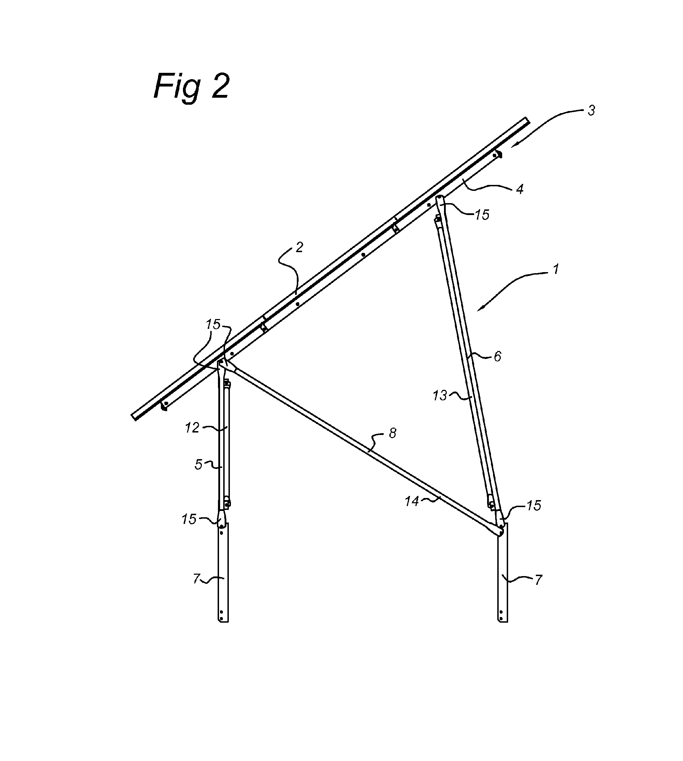

The solar panel installation shown in figures 1 and 2 consists of the support structure 1 as well as of several solar panels 2, some of which have been shown in figure 1. The solar panels 2 are arranged according to rows which are oriented slantingly. The support structure 1 itself consists of a series of frames 3 which are arranged next to each other and which each consists of a solar panel support bar 4, a relatively short leg 5 and a relatively long leg 6. At the upper end, the legs 5, 6 are connected to a respective solar panels support bar 4 and at the lower end the legs 5, 6 are connected to a respective foundation element 7. Furthermore, The frames 3 comprise the stabilizing struts 8 which in the embodiment shown extend between the lower end of the relatively long leg 6 and upper end of the relatively short leg 5.

The solar panel support bars 4 of each frame 3 are interconnected at their upper end and at their lower ends by means of interconnecting bars 9. Thus, although each frame 3 consists of one solar panels support bar 4, they support two neighboring solar panels 2. The stability of the series of frames 3 is furthermore improved by means of the obliquely oriented stabilizing bars 10 which extend between the lower end and the upper end of neighboring relatively long legs 6, as well as obliquely oriented stabilizing bars 11 which extend between the lower end and the upper end of neighboring relatively short legs 5.

According to the invention, the relatively short legs 5 as well as the relatively long legs 6 each consist of pairs of two parallel tubes 12 respectively 13. Also, the stabilizing struts 8 each consists of pairs of two parallel tubes 14. Over the major part, the tubes 12-14 of each pair of tubes are not connected to each other, and are clamped to opposite sides of the respective solar panels support bars 4. To that end, the tubes 12-14 comprises flattened lips 15 at both ends, which lips 15 are oriented according to the longitudinal direction of the tube 12-14 in question.

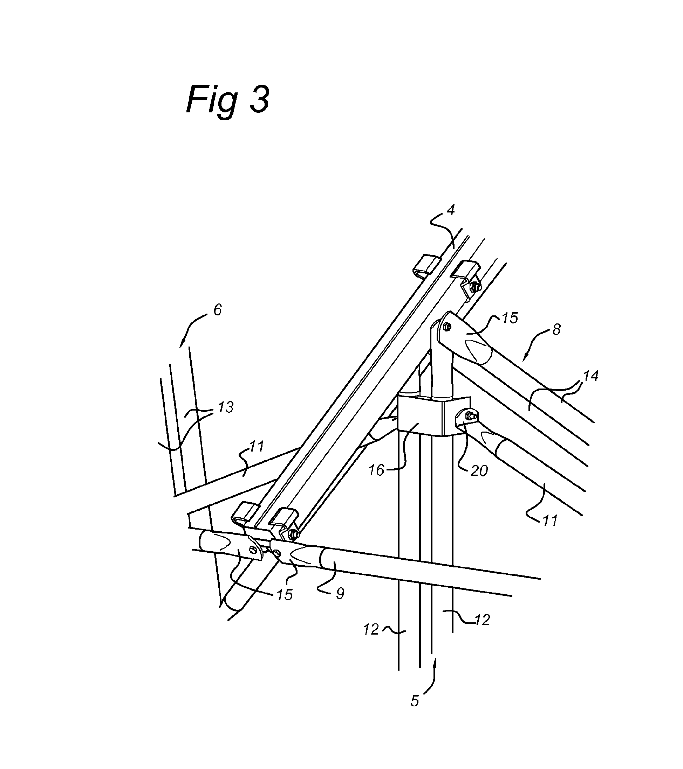

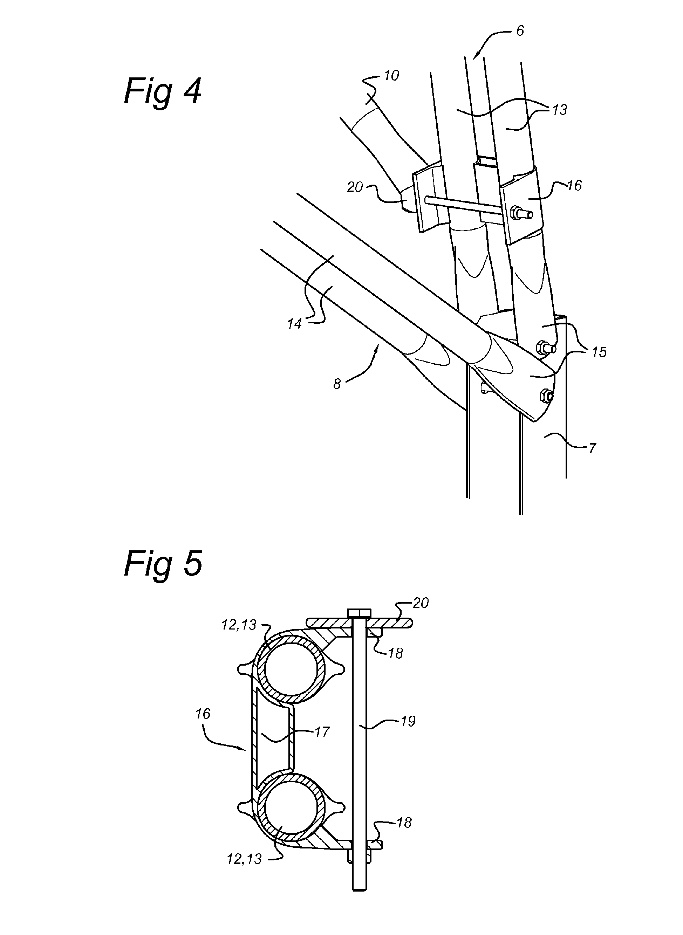

As shown in figures 3 and 4, the part over which the tubes 12 of the relatively short legs 5 lack any interconnection, is delimited by the position of the clamps 16 and the connection to the foundation element 7. Similarly, the part over which the tubes 13 of the relatively long legs 6 lack any interconnection, is delimited by the position of the clamp 16 and the connection of the tubes 13 to the solar panel support bar 4. These clamps 16 are used, in the embodiment shown, to connect the obliquely oriented stabilizing bars 10 respectively 11 to the relatively long leg 6 respectively to the relatively short leg 5. However, it is also possible to connect these obliquely oriented stabilizing bars 10, 11 directly to the solar panels support bars 4 and to the foundation elements 7. In such an embodiment (not shown), the tubes 12, 13 are free of any interconnection over their full lengths as defined by the lip connections.

The lips 20 of the obliquely oriented stabilizing bars 10, 11 are bent over according to their angular orientation, and are connected to the clamps 16 as shown in figure 5. These clamps 16 consist of an intermediate part 17 and ears 18, between which the respective tubes 12, 13 are clamped by means of the bolt connection 19 extending through said ears 18.

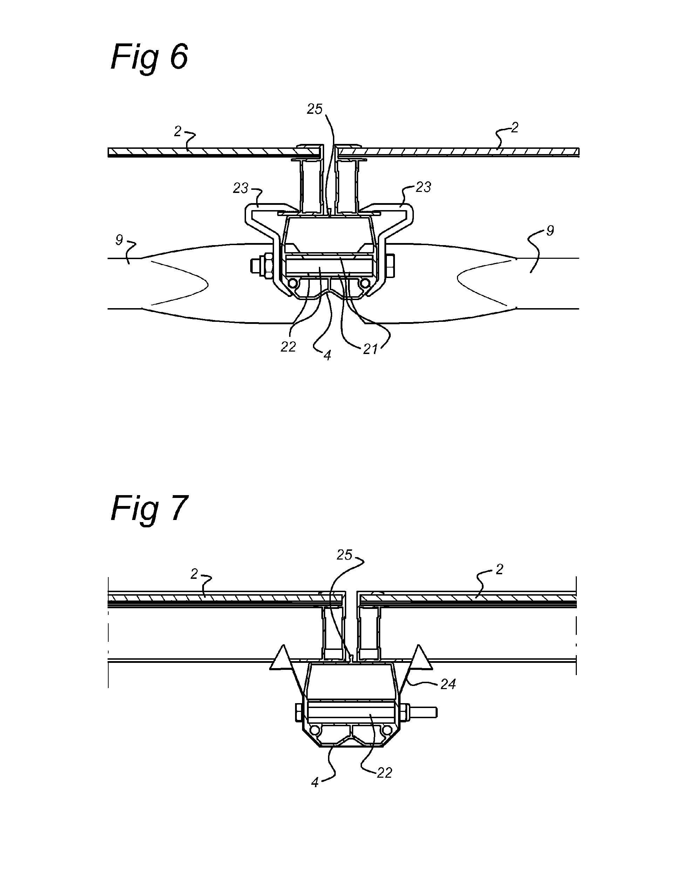

As shown in figures 6 and 7, the solar panels support tube 4 consists of a hollow profile, the internal space of which is traversed by dams 21. A bolt connection 22 extends through said hollow profile and between said dams 21, clamping the lips 15 of the legs 5, 6 and of the stabilizing struts 8 to the solar panel support bar 4. Moreover, solar panel connection clamps 23 are connected to the solar panels support bar 4 by means of a bolt connection 22. Furthermore, holding clamps 24 are connected to the solar panel support bar 4, against which holding clamps an edge of the solar panels 2 is supported, thus preventing the solar panels 2 from sliding down the solar panels support tube 4.

The upper surface of the solar panel support tube 4 is equipped with an upstanding ridge 25, at both sides of which neighboring solar panels 2 are supported.

### List of reference numerals

- 1.: Support structure
- 2.: Solar panel
- 3.: Frame
- 4.: Solar panels support tube
- 5.: Relatively short leg
- 6.: Relatively long leg
- 7.: Foundation element
- 8.: Stabilizing strut
- 9.: Interconnecting bar
- 10.: Stabilizing tube
- 11.: Stabilizing tube
- 12.: Tube of relatively short leg
- 13.: Tube of relatively long leg
- 14.: Tube of stabilizing strut
- 15.: Lip
- 16.: Clamp
- 17.: Intermediate part of clamp
- 18.: Ear of clamp
- 19.: Bolt connection
- 20.: Bent lip
- 21.: Dam
- 22.: Bolt connection
- 23.: Solar panel clamp
- 24.: Holding clamp
- 25.: Ridge of solar panel support tube

## Claims

1. Support structure (1) for solar panels (2), comprising a series of frames (3) which are arranged next to each other and which each comprise a solar panel support bar (4), **characterized in that** the frames each comprise mutually spaced legs (5, 6) which each comprise a pair of spaced apart, generally parallel and rectilinear tubes (12, 13) having a hollow, preferably cylindrical cross section and which are connected to opposite sides of the solar panel support bar (4) as well as to a respective foundation element (7).

2. Support structure according to claim 1, wherein, the tubes of each pair extend free of interconnection between said tubes over at least a major part thereof which is equal to at least half of the length of said tubes, preferably over the full part thereof between the solar panel support bar (4) and the foundation element (7).

3. Support structure according to claim 1 or 2, wherein the tubes (12, 13) at both ends thereof comprise flattened lips (15), said lips being connected to opposite sides of a solar panel support bar (4) and to a foundation element (7).

4. Support structure according to claim 3, wherein the lips of a pair of tubes (12, 13) are connected to opposite sides of a respective support bar (4) by means of a bolt connection (22) which extends through the support bar and the lips (15).

5. Support structure according to claim 3 or 4, wherein the lips (15) extend according to, and/or coincide with, the longitudinal direction of the respective tube (12, 13).

6. Support structure according to any of claims 3-5, wherein the lips (15) of a pair of tubes (12, 13) are connected to opposite sides of a foundation element (7), such as to a C-profile or U-profile.

7. Support structure according to any of the preceding claims, wherein each frame (3) comprises a relatively long leg (13) and a relatively short leg (12) providing a slanting orientation of the solar panel support bar (4).

8. Support structure according to any of the preceding claims, wherein a frame (3) comprises a stabilizing strut (8) which extends obliquely between the support bar (4) and at least one leg and/or between both legs (12, 13), said strut (8) comprising a pair of generally spaced apart parallel and rectilinear tubes (14) of equal length having a hollow, preferably circular cross section, the tubes of each pair extend free of interconnection between said tubes over at least a major part thereof which is equal to at least half of the length of said tubes.

9. Support structure according to claim 8, wherein the stabilizing strut tubes (14) of each pair are connected to opposite sides of the solar panel support bar (4).

10. Support structure according claim 8 or 9, wherein the stabilizing strut tubes (14) of each pair are connected to opposite sides of a foundation element (7).

11. Support structure according to claim 9 or 10, wherein the stabilizing strut tubes (14) comprise lips (15) which are oriented according to, and/or coincide with, the longitudinal direction of said tubes.

12. Support structure according to any of the preceding claims, wherein neighboring frames (3) are interconnected through hollow rectilinear tubes (9), possibly of circular cross section and/or possibly of equal length, which are preferably positioned at opposite ends of the support bars (4).

13. Support structure according to any of the preceding claims, wherein neighboring frames (3) are interconnected through obliquely oriented stabilizing tubes (10, 11), possibly of circular cross section.

14. Support structure according to claim 13, wherein at least one stabilizing tube (10, 11) is connected, possibly by means of lips (20), to a leg (5, 6), for instance to a clamp (16) which engages both tubes (12, 13) of said leg, said clamp being positioned outside the major part of said tubes which extends in an uninterrupted fashion free of interconnection.

15. Solar panel installation, comprising a support structure (1) according to any of the preceding claims, as well as solar panels (2) which are each arranged on respectively two neighboring solar panel support bars (4) of said support structure.
